# EUROPÄISCHE PATENTANMELDUNG

(11) **EP 1 734 441 A1**
(43) Veröffentlichungstag der Anmeldung: **20.12.2006**
(21) Anmeldenummer: 05013017.8
(22) Anmeldetag: 16.06.2005
(51) Int. Cl.: G06F 9/44, G05B 19/05

(54) **Automatisierungssystem mit verknüpften Automatisierungsobjekten**

(71) Anmelder: SIEMENS AKTIENGESELLSCHAFT, 80333 München (DE)
(72) Erfinder: Lange, Ronald, 90766 Fürth (DE); Leins, Ralf, 75228 Ispringen (DE); Rupprecht, Georg, 90409 Nürnberg (DE); Trapp, Lothar, 90537 Feucht (DE)

(57) **Zusammenfassung**

Die Erfindung betrifft ein Automatisierungssystem, wie es insbesondere im Bereich der Automatisierungstechnik verwendet wird. Darüber hinaus betrifft die Erfindung ein Verfahren zur Projektierung eines Automatisierungssystems. Bei bekannten Lösungen ist bei der Wiederverwendung von Funktionsbausteinkomplexen eine manuelle Anpassung der Instanzenbezeichnungen erforderlich. Um eine Lösung bereitzustellen, durch die eine manuelle Anpassung der Bezeichnungen auf einfache Art und Weise vermieden wird, wird ein Automatisierungssystem vorgeschlagen, wobei das Automatisierungssystem ein Automatisierungsobjekt (4, 5, 12) mit einer Funktion (7, 11) aufweist, welche eine Bezugnahme auf ein weiteres Automatisierungsobjekt (4, 5, 12), insbesondere den Aufruf eines solchen Automatisierungsobjektes (4, 5, 12), umfasst. Erfindungsgemäß weist die Funktion (7, 11) eine Verknüpfung (8) mit dem weiteren Automatisierungsobjekt (4, 5, 12) auf zum Zwecke der Identifikation des weiteren Automatisierungsobjektes (4, 5, 12).

## Beschreibung

Die Erfindung betrifft ein Automatisierungssystem, wie es insbesondere im Bereich der industriellen Automatisierungstechnik verwendet wird. Darüber hinaus betrifft die Erfindung ein Verfahren zur Projektierung eines Automatisierungssystems.

Zur Projektierung von Automatisierungssystemen kommen so genannte Engineeringsysteme zum Einsatz. Mit Hilfe solcher Engineeringsysteme wird der Programmcode des Automatisierungssystems erzeugt. Bei Automatisierungssystemen, die mit Hilfe von IEC 61131-Programmiersprachen erzeugt werden, erfolgt die Programmierung bausteinorientiert. Der Programmcode wird dabei in so genannten Funktionsbausteinen abgelegt. Um Funktionsbausteine wiederzuverwenden und an geänderte Systemanforderungen individuell anzupassen, werden von den Funktionsbausteinen so genannte Instanzen angefertigt. Beispielsweise können für einen Funktionsbaustein, der beispielsweise für einen Regelalgorithmus programmiert wurde, mehrere Instanzen erstellt werden. Diese Instanzen dienen dann beispielsweise für die Realisierung mehrerer, ganz konkreter Regler auf einer speicherprogrammierbaren Steuerung (SPS).

Typischerweise müssen jedoch die Bezeichnungen (Namen, Nummern etc.) der einzelnen Instanzen der Funktionsbausteine für jeden Anwendungsfall geändert werden. Dies ist beispielsweise dann zwingend erforderlich, wenn der gleiche Programmcode in Form verschiedener Instanzen mehrfach innerhalb einer SPS eingesetzt werden soll. Eine Umbenennung der Instanzen ist ebenfalls erforderlich, wenn die fremde SPS, in welcher der Programmcode eingesetzt werden soll, ein anderes Namensschema verwendet.

Bei Funktionsbausteinkomplexen, also einer Anzahl zusammengehöriger Funktionsbausteine mit gegenseitigen Abhängigkeiten, wie beispielsweise CALL-Bezeichnungen, besteht bei bisher bekannten Lösungen der Nachteil, dass bei einer Änderung der Bezeichnungen einzelner Instanzen der Programmcode manuell und sehr aufwändig an die neuen Bezeichnungen angepasst werden muss.

Erfolgt diese manuelle Anpassung nicht, so kann es zu Fehlfunktionen des Programmcodes führen. Weist nämlich ein Funktionsbaustein eine Funktion auf, mit der eine andere Instanz aufgerufen wird, so ruft der Funktionsaufruf - sofern noch keine manuelle Anpassung erfolgt ist - noch immer die alte und jetzt ungültige Bezeichnung, also die alte Instanz, auf.

Die Aufgabe der vorliegenden Erfindung ist es, eine Lösung bereitzustellen, durch die eine manuelle Anpassung der Bezeichnungen auf einfache Art und Weise vermieden wird.

Diese Aufgabe wird durch ein Automatisierungssystem nach Anspruch 1 sowie ein Verfahren nach Anspruch 4 gelöst.

Danach wird ein Automatisierungssystem vorgeschlagen, wobei das Automatisierungssystem ein Automatisierungsobjekt mit einer Funktion aufweist, welche eine Bezugnahme auf ein weiteres Automatisierungsobjekt, insbesondere den Aufruf eines solchen Automatisierungsobjektes, umfasst. Erfindungsgemäß weist die Funktion eine Verknüpfung mit dem weiteren Automatisierungsobjekt auf zum Zwecke der Identifikation des weiteren Automatisierungsobjektes.

Eine Grundidee der Erfindung ist es, Aufrufbeziehungen in einzelnen Automatisierungsobjekten, insbesondere in Funktionsbausteinen, über Verknüpfungen nach Art von Zeigern oder Links in der Datenhaltung zu modellieren. Dies hat zur Folge, dass die Beziehungen zwischen den einzelnen Automatisierungsobjekten zwar weiterhin dem Benutzer angezeigt werden, intern aber über Verknüpfungen gespeichert werden. Eine Änderung der Instanzenbezeichnung, also der logischen Adresse des Automatisierungsobjektes, führt daher automatisch zu einem Aufruf der korrekten Instanz. Der Funktionsaufruf ist mit anderen Worten erfindungsgemäß stets mit der Anzeige der korrekten Instanzenbezeichnung verknüpft.

Dies ist insbesondere dann sinnvoll, wenn ein Automatisierungsobjekt, insbesondere ein Funktionsbausteinkomplex, von einem Automatisierungsgerät in ein anderes Automatisierungsgerät verschoben oder kopiert wird oder das Automatisierungsobjekt umbenannt wird, wodurch sich dessen Bezeichnung (Name, Nummer, ...), also dessen logische Zugriffsadresse, ändert und somit eine bisher bestehende Beziehung zu einem anderen Automatisierungsobjekt "verloren gehen" würde.

Unter einer "Funktion mit einer Bezugnahme auf ein weiteres Automatisierungsobjekt" wird dabei nicht nur eine Funktion im Sinne eines bestimmten Schrittes, beispielsweise "Aufrufen" ("CALL") oder "Laden" ("LOAD") verstanden. Vielmehr ist darunter eine beliebige Beziehung zwischen Automatisierungsobjekten zu verstehen, einschließlich der Frage, wie Automatisierungsobjekte zueinander in Beziehung stehen und unter welchen Adressen, insbesondere logischen Adressen, auf Automatisierungsobjekte zugegriffen werden kann.

Vorteilhafte Ausführungsformen der Erfindung sind in den Unteransprüchen angegeben.

Die Erfindung ist vorzugsweise nicht nur für die Modellierung von Aufrufbeziehungen in Funktionsbausteinen verwendbar. Auch andere, insbesondere hardwarebezogene Automatisierungsobjekte in der Projektierung können erfindungsgemäß verknüpft werden. So kann beispielsweise von dem Programmcode heraus auf Eingangs- und Ausgangssignale zugegriffen werden. Hierzu erfolgt vorzugsweise einer Verknüpfung mit einem I/O-Tag, welches einem Kommunikationskanal einer Hardwarebaugruppe zugeordnet ist. Auch bei einer Wiederverwendung einer solchen kombinierten Lösung aus Hardware und Software (Erstellung einer Instanz) sind dann erfindungsgemäß sämtliche internen Beziehungen über Verknüpfungen modelliert. Darüber hinaus ist ein Einsatz der Erfindung ebenfalls möglich im Zusammenhang mit der Verwendung globaler Ressourcen des Automatisierungsgerätes (wie z.B. Merker usw.). Grundsätzlich können so sämtliche Beziehungen zwischen Automatisierungsobjekten über Verknüpfungen abgebildet werden.

In einer bevorzugten Ausführungsform der Erfindung erfolgt die Anzeige der Instanzenbezeichnung nur im Fall der Anzeige des Programmcodes, intern ist die Instanzenbezeichnung durch die Verknüpfung ersetzt. Mit anderen Worten unterscheidet sich die Darstellung der Instanzenbezeichnung im Fall der Anzeige für einen Benutzer, bei der die Instanzenbezeichung im Klartext angezeigt wird, von der internen Realisierung, bei der die Instanzenbezeichnung durch die Verknüpfung abgebildet wird. Der Benutzer nimmt also nicht wahr, dass es sich bei der Instanzenbezeichnung tatsächlich nur um eine Verknüpfung im Sinne eines intern als Referenz gespeicherten Datensatzes handelt. Für den Benutzer stellt sich die Darstellung der Instanzenbezeichnung als reale Anzeige dar.

In einer weiteren bevorzugten Ausführungsform der Erfindung werden die erfindungsgemäßen Verknüpfungen bei einer Wiederverwendung (Vervielfältigung) eines Automatisierungsobjektkomplexes, also bei der Erstellung einer Instanz, mitkopiert. Mit anderen Worten erfolgt ein Kopieren der in der Datenablage gespeicherten Referenz. Das interne Datenmodell muss im Fall einer Änderung einer Instanzenbezeichnung also nicht geändert werden.

Die Erfindung wird vorzugsweise im Zusammenhang mit Projektierungssystemen in der Automatisierungstechnik angewandt. Ein Beispiel für ein solches Projektierungssystem ist die Produktlinie "SIMATIC" von der Fa. SIEMENS.

Die Erfindung wird nachfolgend mit Hilfe von Ausführungsbeispielen beschrieben, die anhand der Figuren näher erläutert werden. Hierbei zeigen:
- FIG 1: eine schematische Darstellung der Erstellung eines Instanzkomplexes nach dem Stand der Technik,
- FIG 2: eine schematische Darstellung der Erstellung eines Instanzkomplexes, wie sie in der internen Datenhaltung abgebildet ist,
- FIG 3: eine schematische Darstellung der Erstellung des Instanzkomplexes aus FIG 2, wie sie in der Anzeige für einen Benutzer abgebildet ist, und
- FIG 4: eine schematische Darstellung der Verknüpfung von software- und hardwarebezogenen Automatisierungsobjekten.

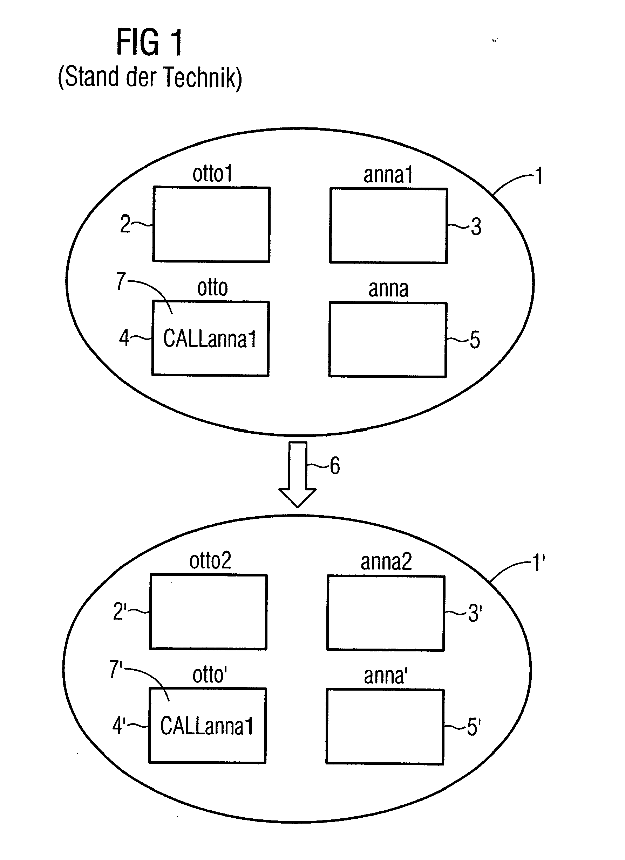

Aus dem Stand der Technik ist es bekannt, bei einer Änderung der Bezeichnungen einzelner Instanzen den Programmcode, insbesondere die Aufruffunktionen, manuell anzupassen. FIG 1 illustriert einen Fall, in dem eine solche manuelle Anpassung (noch) nicht vorgenommen wurde. Der ursprüngliche Instanzenkomplex 1 mit den Instanzen "otto1" 2 und "anna1" 3 mit den Funktionsbausteinen "otto" 4 und "anna" 5 wird kopiert, um für eine weitere Anwendung wieder verwendet zu werden. Der Kopiervorgang ist dabei durch Pfeil 6 gekennzeichnet. Die Namen der Instanz 2', 3' müssen dabei geändert werden. Sie lauten nun "otto2" und "anna2". Die Aufruffunktion "CALL" 7' in dem Funktionsbausteinen "otto'" 4' umfasst jedoch immer noch den früheren und jetzt ungültigen Instanzennamen "anna1", was zu einer Fehlfunktion der Anwendung führt. Um eine solche Fehlfunktion zu verhindern, ist es erforderlich, den Programmcode für die Aufruffunktion 7' manuell zu ändern derart, dass bei einem Aufruf anstelle von "anna1" richtig "anna2" aufgerufen wird.

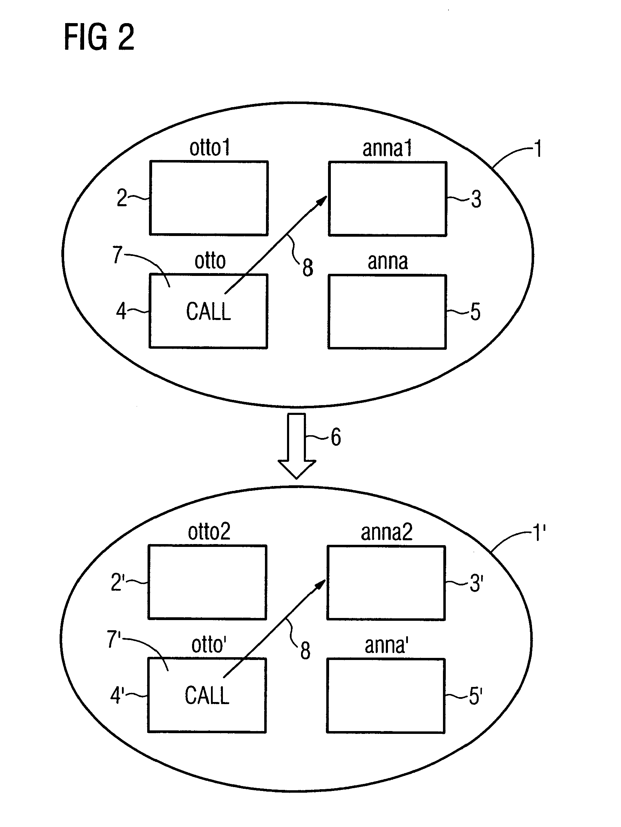

Erfindungsgemäß wird der Instanzenname, im Beispiel also "anna1" in der Aufruffunktion 7 in einem solchen Fall intern, d.h. in der Datenhaltung (Datenablage) des Automatisierungssystems, durch eine Verknüpfung in Form eines Zeigers 8 ersetzt, vgl. FIG 2. Dieser Zeiger 8 weist auf die entsprechende Instanz. Im Beispiel weist der Funktionsbaustein "otto" 4 eine Aufruffunktion "CALL" 7 mit einem Zeiger 8 auf, der auf die Instanz "anna1" 3 weist. Nach dem Kopieren des Instanzenkomplexes 1 weist der gleiche Zeiger 8 automatisch auf die nun korrekt identifizierte Instanz "anna2" 3', ohne dass eine manuelle Anpassung der Aufruffunktion 7 erforderlich ist.

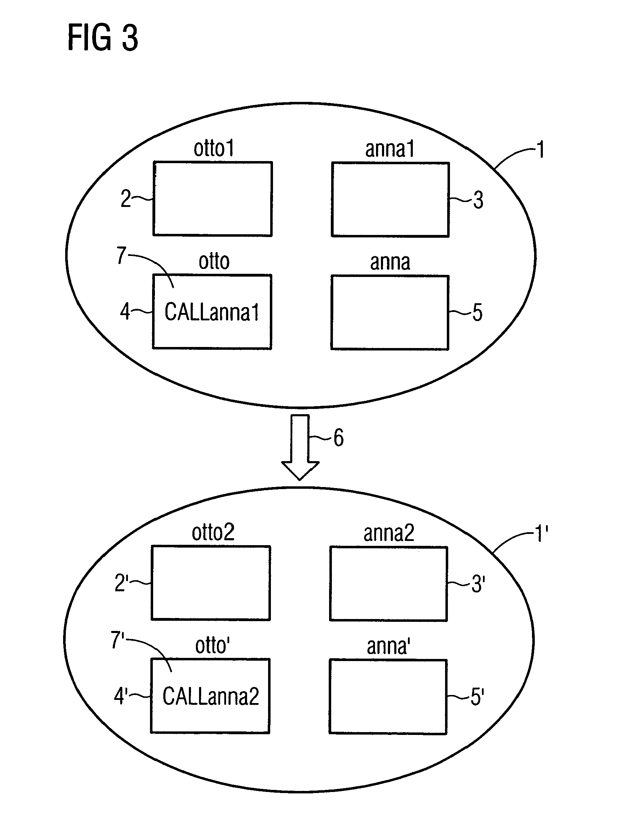

Während in der Datenhaltung die in FIG 2 gezeigte Abbildung des Zeigers 8 realisiert wird, erfolgt bei einer Darstellung des Instanzenkomplexes 1 für einen Benutzer die Anzeige der Instanzennamen im Klartext, vgl. FIG 3. Mit anderen Worten sieht der Benutzer weder vor noch nach dem Kopieren des Instanzenkomplexes 1 einen Zeiger 8 als Bestandteil der Aufruffunktion 7, 7' im Funktionsbaustein "otto" 4 bzw. "otto'" 4'. Stattdessen wird jeweils der aktuell gültige Name der Instanz 3, 3', nämlich vor dem Kopieren "anna1" und nach dem Kopieren "anna2" angezeigt.

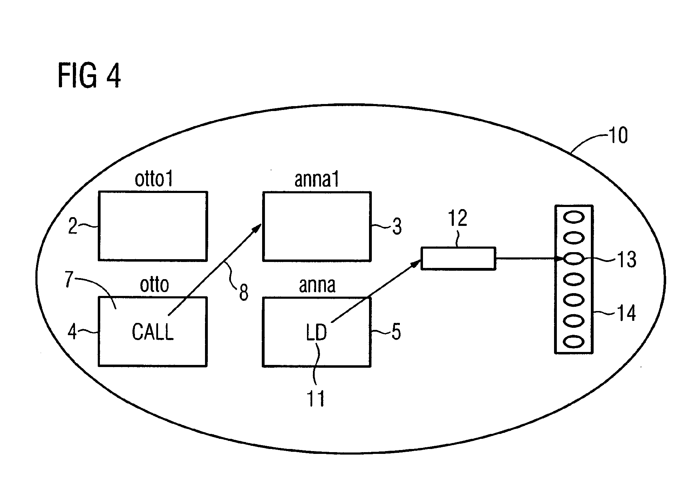

FIG 4 zeigt schließlich ein weiteres Ausführungsbeispiel für einen Instanzenkomplex 10 mit Software- und Hardwarekomponenten. Hier ist die erfindungsgemäße Zeigertechnik sowohl für die Verknüpfung von Funktionsbausteinen untereinander als auch für die Verknüpfung von Funktionsbausteinen und hardwarebezogenen Automatisierungsobjekten dargestellt. So weist zum einen die Aufruffunktion "CALL" 7 im Funktionsbaustein "otto" 4 einen Zeiger 8 auf, der auf den Namen der Instanz "anna1" 3 weist. Zum anderen weist die Aufruffunktion "LD" (LOAD) 11 des Funktionsbausteins "anna" 5 einen Zeiger 8' auf, der auf einen I/O-Tag 12 weist, wobei der I/O-Tag 12 wiederum mit einem Kommunikationskanal 13 einer Hardwarebaugruppe 14 verknüpft ist. Mit anderen Worten wird aus dem Programmcode heraus auf ein I/O-Tag 12 zugegriffen. Durch derartige Verknüpfungen kann auch die komplette Hardwarekonfiguration in die erfindungsgemäße Darstellung von Beziehungen zwischen den Automatisierungsobjekten eingebunden werden.

Zusammengefasst betrifft die Erfindung somit ein Automatisierungssystem, wie es insbesondere im Bereich der industriellen Automatisierungstechnik verwendet wird. Darüber hinaus betrifft die Erfindung ein Verfahren zur Projektierung eines Automatisierungssystems. Bei bekannten Lösungen ist bei der Wiederverwendung von Funktionsbausteinkomplexen eine manuelle Anpassung der Instanzenbezeichnungen erforderlich. Um eine Lösung bereitzustellen, durch die eine manuelle Anpassung der Bezeichnungen auf einfache Art und Weise vermieden wird, wird ein Automatisierungssystem vorgeschlagen, welches ein Automatisierungsobjekt 4, 5, 12 mit einer Funktion 7, 11 aufweist, welche eine Bezugnahme auf ein weiteres Automatisierungsobjekt 4, 5, 12, insbesondere den Aufruf eines solchen Automatisierungsobjektes 4, 5, 12, umfasst. Erfindungsgemäß weist die Funktion 7, 11 eine Verknüpfung 8 mit dem weiteren Automatisierungsobjekt 4, 5, 12 auf zum Zwecke der Identifikation des weiteren Automatisierungsobjektes 4, 5, 12.

## Patentansprüche

1. Automatisierungssystem mit einer Anzahl von Automatisierungsobjekten (4, 5, 12), insbesondere Programmbausteinen, wobei ein Automatisierungsobjekt (4, 5, 12) eine Funktion (7, 11) aufweist, welche eine Bezugnahme auf ein weiteres Automatisierungsobjekt (4, 5, 12), insbesondere den Aufruf eines solchen Automatisierungsobjektes (4, 5, 12), umfasst, **dadurch gekennzeichnet, dass** die Funktion (7, 11) eine Verknüpfung (8) mit dem weiteren Automatisierungsobjekt (4, 5, 12) aufweist zur Identifikation des weiteren Automatisierungsobjektes (4, 5, 12).

2. Automatisierungssystem nach Anspruch 1, **dadurch gekennzeichnet, dass** das weitere Automatisierungsobjekt ein weiterer Programmbaustein (4, 5) ist.

3. Automatisierungssystem nach Anspruch 1 oder 2, **dadurch gekennzeichnet, dass** das weitere Automatisierungsobjekt ein hardwarebezogenes Objekt (12), beispielsweise ein I/O-Tag, ist.

4. Verfahren zur Projektierung eines Automatisierungssystems mit einer Anzahl von Automatisierungsobjekten (4, 5, 12), insbesondere einem Programmbausteinen, wobei ein Automatisierungsobjekt (4, 5, 12) eine Funktion (7, 11) aufweist, welche eine Bezugnahme auf ein weiteres Automatisierungsobjekt (4, 5, 12), insbesondere den Aufruf eines solchen Automatisierungsobjektes (4, 5, 12), umfasst, **dadurch gekennzeichnet, dass** der Funktion (7, 11) eine Verknüpfung (8) mit dem weiteren Automatisierungsobjekt (4, 5, 12) zugeordnet wird zur Identifikation des weiteren Automatisierungsobjektes (4, 5, 12).

5. Verfahren nach Anspruch 4, **dadurch gekennzeichnet, dass** bei einer Anzeige des Automatisierungsobjektes (4, 5, 12) die Bezeichnung des identifizierten weiteren Automatisierungsobjektes (4, 5, 12) angezeigt wird.

6. Verfahren nach Anspruch 4 oder 5, **dadurch gekennzeichnet, dass** bei einer Erstellung (6) einer Instanz (1') der Automatisierungsobjekte (4, 5, 12) die Verknüpfung (8) mitkopiert wird.
